# EUROPEAN PATENT SPECIFICATION

(11) **EP 0 402 444 B1**
(45) Date of publication and mention of the grant of the patent: **29.06.1994**
(21) Application number: 90900955.7
(22) Date of filing: 16.12.1989
(51) Int. Cl.: B60R 1/08

(54) **A REAR VIEW SYSTEM FOR A VEHICLE**
RÜCKBLICKSPIEGEL FÜR EIN KRAFTFAHRZEUG
SYSTEME DE RETROVISEUR POUR VEHICULES

(30) Priority: 17.12.1988 GB 8829501
(43) Date of publication of application: 19.12.1990
(73) Proprietor: MILNER, Peter J, Nuneaton Warwickshire CV11 6NS (GB)
(72) Inventor: MILNER, Peter J, Nuneaton Warwickshire CV11 6NS (GB)
(74) Representative: Bryer, Kenneth Robert
(86) International application number: GB8901505
(87) International publication number: WO9006866

(56) References cited:
- EP-A- 283 467
- DE-A-31 446 486
- DE-U- 8 804 109
- US-A- 3 826 562
- US-A- 3 979 158

## Description

This invention generally relates to a rear view system for a vehicle, and particularly to such a system especially suitable for a road transport vehicle as specified in the preamble of claim 1 and as disclosed, for example, in the documents DE-U-8804109.3 and/or DE-A-3 146 486 as well in figures 1 and 2 of the present application.

Conventional rear view systems usually comprise a single interior mirror supplemented by two exterior mirrors. At one time exterior mirrors were mounted on the vehicle wing over the front wheel but in more recent vehicles they are usually fitted on the doors at the front of the vehicle, which position represents the closest they can be brought to the drive whilst remaining forward of him. Exterior mirrors are becoming increasingly necessary as an aid to safe driving in today's traffic conditions. Dense traffic and multi-lane highways demand increasingly high standards of lane discipline and all-round awareness. The information necessary to maintain such high standards is achieved largely through the use of exterior rear view mirrors. In recognition of this evolving requirement, exterior mirrors have grown larger over recent years. So vital is the need for comprehensive visual information that this growth has even taken place against a background of intense efforts to reduce air drag. Conventional exterior mirrors, however, have been estimated to be responsible for the consumption of up to 1000 litres of fuel during the life of a car.

Apart from this cost, exterior mirrors generate aerodynamic noise, are vulnerable to damage, can cause injury and, finally, look aesthetically displeasing on the smooth and rounded exterior surfaces which characterise modern car design.

In recent years increasing emphasis has been placed on efficient use of non-renewable energy resources. Nowhere has this emphasis been more keenly applied than in the development of road transport vehicles. Although great progress has been made in the energy efficiency of engines and in reducing wastage of the mechanical energy thus generated primarily by improvements in vehicle weight reduction, tyre rolling loss reduction and vehicle aerodynamic drag reduction, there is one factor, which is the factor having the greatest effect at higher speeds (where aerodynamic drag may account for up to 80% of the total mechanical energy loss) results in both drag and noise. For this reason, car manufacturers seek any practical means to reduce aerodynamic drag, but they also have many other requirements to fulfil in order to preserve the car as a convenient, comfortable and safe machine to use. As more and more exterior aerodynamic features become increasingly refined, the degrading effects of those which have largely resisted improvement are highlighted. The exterior mirror is one of these features. Sited, as they usually are, in an area where the air speed can be somewhat greater than free stream speed, their degrading effect is magnified.

Furthermore, although they are designed to yield under impact, exterior mirrors remain a traffic hazard. Mirror yield is of most benefit in very low speed impacts. In higher speed impacts, whether against another mirror or a pedestrian, mirror inertia plays an important role and considerable damage and/or injury can occur.

Attempts have been made to overcome this problem by utilising optical systems partly spanning the vehicle body line. One such system is described in DE-U-8804109.3 which discloses the use of a thick prism for both bending and reflecting the light. A similar prism system is described in DE-A-3 146 486. In figures 1 and 2 and corresponding description of the present application is also disclosed a diagram of an arrangement similar to the above-mentioned systems. Both of these systems are impracticable, however, due to image degradation, especially by dispersion.

The present invention seeks to provide a rear view system for a vehicle having substantially reduced protrusion beyond the exterior surface of the vehicle, as compared with existing exterior rear view mirrors, while retaining or improving the rearward and lateral fields of view and overcoming or at least reducing the problem of chromatic aberration due to dispersion.

The present invention also seeks to provide a rear view system offering less resistance to vehicle motion and lower aerodynamic noise than conventional exterior mirrors whilst also being less of a hazard to other road users.

According to one aspect of the invention, there is provided an optical rear view system for a vehicle, comprising a reflector mounted to receive light from objects to the rear of the vehicle and to reflect it towards an observer, and an optical system including a refractor in the light path from object to observer for diverting light incident on or reflected from the reflector, characterised in that the optical system comprises a first refractor in the path of light from the object to the reflector and having an incident and an exit face from which light passing through the first refractor is directed towards the reflector, the said first refractor being positioned and shaped such that the mean optical path length of light through the first refractor is less than the mean optical path length of light from the said exit face of the first refractor to the reflector, and a second refractor in the path of light from the reflector to the observer, the second refractor having an incident face on which light from the reflector is incident, and an exit face from which light leaving the second refractor is directed towards the observer, the position and shape of the second refractor being such that the mean path length of light through the second refractor is less than the mean path length of light from the reflector to the incident face of the second refractor.

As will be appreciated, the rear view system of the invention is composed of passive optical elements, which present to the driver, optically and physically, largely the same view as that conventionally expected of a vehicle exterior mirror, while at the same time protruding beyond the local exterior surface of the vehicle by substantially less than the amount of an optically comparable conventional mirror, and is distinguished in this respect from rear view systems involving television cameras or other "video" arrangements which present the image of the rearward view of a screen.

As used in this specification the term "observer" will be understood to mean the eye or eyes of an observer.

Preferably the surface of the system on which light from an object behind the vehicle is first incident lies at an acute angle to the longitudinal axis of the vehicle and is inclined such that a forward part of the incident surface is further from the vehicle axis than a rearward part thereof.

The said incident surface of the system may be the said incident face of the said refractor, which diverts light incident thereon towards the vehicle axis.

At least one surface of at least one optical element of the system may be composed of a plurality of planar surface elements inclined to the general plane of the surface. In one embodiment the incident surface of the optical system is composed of a plurality of elementary prisms. The incident surface of the system may however be continuous, that is having no discontinuities. If, on the other hand, it is composed of a plurality of elementary prisms, the angles of inclination of the incident surfaces of these may vary over the width of the optical element. This arrangement extends further the field of view through the system.

At least a part of the optical system, for example the reflector, may lie inside the boundary defined by the outer surface of the vehicle.

The present invention also comprehends a motor vehicle fitted with one or more rear view systems as herein defined.

The present invention may be put into practice using as the reflector a component having a silvered surface, or the reflector may be one in which reflection takes place by total internal reflection. The refractors may comprise or include refractive elements in the form either of conventional solid prisms or in the form of refractors. In either case the surfaces may be planar, cylindrical, spherical, acylindric or aspheric, according to the specific requirements of the particular application. Dispersion can be further reduced if the materials from which the two refractors are made is suitably chosen. Different materials may be used for the first and second refractors.

Various specific embodiments of the invention will now be described by way of example, with reference to the accompanying drawings, in which
Figure 1 is a schematic diagram of an arrangement similar to the already known prior art (see, for example, DE-U-8804109.3 and/or DE-A-3 146 486) and illustrating the optical principles underlying the invention;
Figure 2 is a ray diagram which illustrates the optical behaviour of the arrangement shown in Figure 1;
Figure 3 is a diagram illustrating a first embodiment of the invention based on the principles outlined in Figure 1;
Figure 4 is a ray diagram which illustrates the optical behaviour of the embodiment shown in Figure 3;
Figure 5 is a diagram schematically illustrating a second embodiment of the invention, but incorporating Fresnel prisms;
Figure 6 is a ray diagram which illustrates the optical behaviour of the embodiment shown in Figure 5;
Figure 7 schematically illustrates another embodiment, similar to that of Figure 5, but incorporating non-planar optical elements;
Figure 8 is a ray diagram which illustrates the optical behaviour of the embodiment shown in Figure 7;
Figure 9 is a schematic diagram of a further embodiment, in which the parts outside the vehicle may be physically separate from those inside;
Figure 10 is a ray diagram which illustrates the optical behaviour of the arrangement shown in Figure 9;
Figure 11 is a diagrammatic view illustrating in perspective a practical embodiment of the invention seen from the outside of a vehicle; and
Figure 12 is a perspective view from inside the vehicle of the practical embodiment of Figure 11.

The body line 10 in the drawings serves to identify the location of the mirror assembly with respect to the vehicle exterior; it may but does not necessarily coincide with a window of the vehicle.

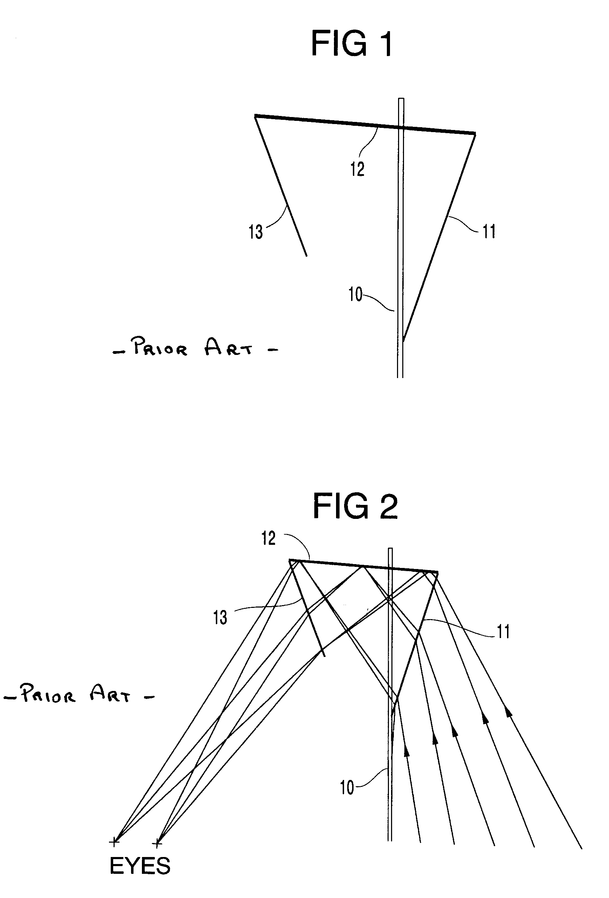

The optical principles underlying the invention, are generally illustrated in Figure 1. Planar surfaces 11 and 13 are refracting surfaces, while planar surface 12 is a reflector (silvered, if necessary), acting to reflect light incident thereon.

Figure 2 is a ray diagram constructed by assuming that the space between the three surfaces filled with a homogeneous transparent medium. Such a system, although it does have a relatively low profile, and produces a non-linear diminished field, with the image at object distance for all eye positions, suffers from the disadvantage of dispersion which, as might be expected, causes colour fringes on the image in certain conditions, and degrades it unacceptably.

In order to overcome this disadvantage hereinbelow the embodiment of the invention described hereinbelow have been invented, starting from this basic optical arrangement, with special features which make it possible to achieve satisfactory optical and physical characteristics.

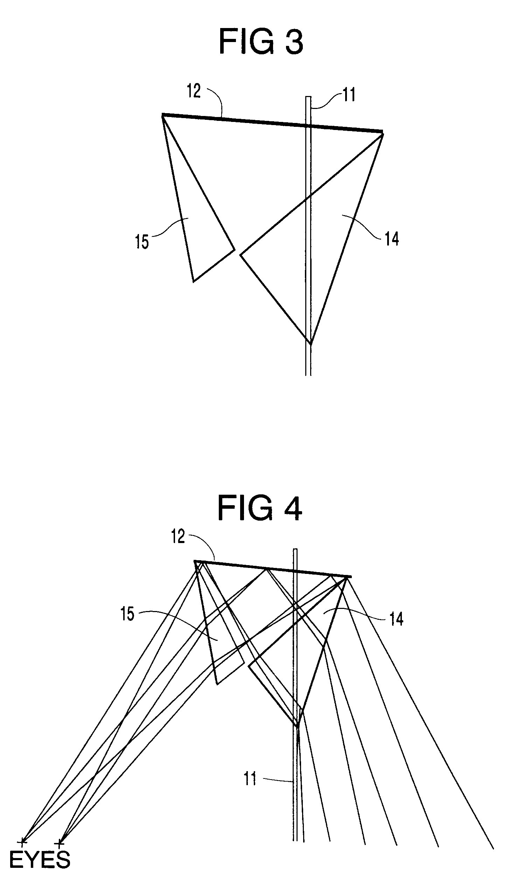

Figures 3 and 4 show an optical arrangement using discrete prisms 14, 15 and a separate reflector 12, and its ray diagram, respectively. By adopting different materials for the two prisms, in this case acrylic for prism 14 and acrylic/styrene copolymer for prism 15, dispersion may be effectively eliminated or at least reduced to an insignificant level.

The angles of all four refracting surfaces, and the reflecting surface, as well as the optical properties of the prisms, are variables by which linearity, image size and dispersion may be varied to produce a desired, or acceptable optical performance. For example if it were possible to produce a symmetrical design in which the prisms have equal apex angles, are in the same material, and form equal angles with the mirror all the above aberrations are avoided. Unfortunately, such a design cannot be adopted because the exit rays cannot readily be made to emerge towards the driver's eyes. However, by inserting one or more contact deviation achromatic prisms (not shown) in the light path from mirror assembly to eye this may be rectified. Alternatively, in some instances it may be possible to divert the light path by dual reflection from two additional mirror (again not shown).

In some applications, for example passenger side mirrors, a diminished image may be desirable in order to widen the field of view. In this context it should be noted that the diminished image obtained by the optical system described is formed at the same distance as the object. This is preferred to the conventional convex mirror to diminish the image for which greater eye accommodation is needed.

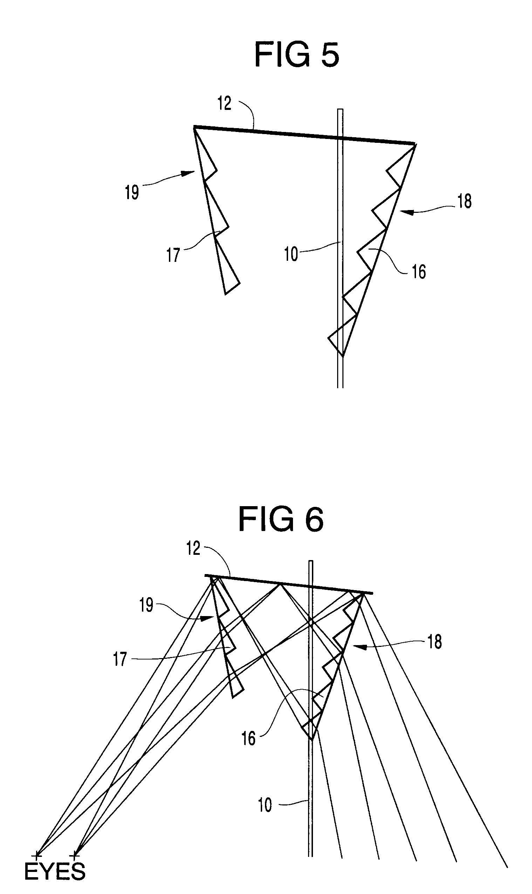

For reasons of packaging, weight and cost, practical designs incorporating Fresnel prisms are preferred. Figures 5 and 6 illustrate such a design, and its ray diagram, respectively. Preferably, the Fresnel elementary prisms 16, 17 are formed only on the inside of each of two prisms 18, 19 as shown. The figures show the prismatic elements 16, 17 on a larger scale than would normally be used in practice, for the sake of clarity.

Other possible advantages of the Fresnel type of design include reduced interference with window design and much reduced dispersion, although the discontinuities between individual elementary prisms 16, 16 may constitute an optical disadvantage unless the image produced by each element can be appropriately overlapped.

All of the foregoing examples of the prismatic type design have used planar surfaces in order to keep the image at object distance for all light passing through the system. The introduction of non-planar surfaces tends to destroy this property, causing the image to move in a disconcerting way when the head is moved. Nevertheless, curved surfaces can be useful to change field linearity and image magnification, and may also permit lower protrusion designs.

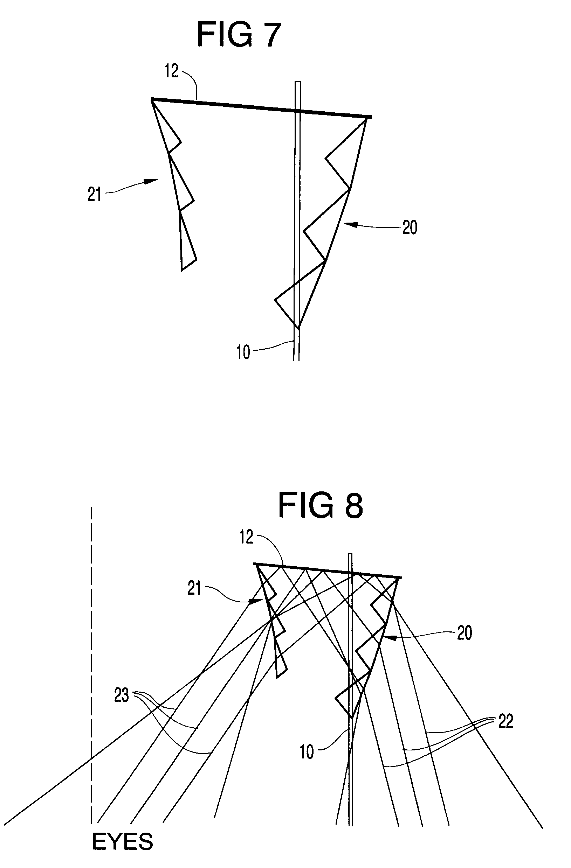

Figures 7 and 8 illustrate schematically such a design and its ray diagram, respectively, using cylindrically curved Fresnel prisms 20, 21. In order to highlight the need to keep the image at object distance, a parallel incident ray bundle 22 is shown in the figure 8 ray diagram, which emerges from the system still parallel as ray bundle 23, as required. In order to achieve the necessary curvature, flat Fresnel prisms of plastics or other elastic material may be flexed into shape during installation into the mirror assembly housing.

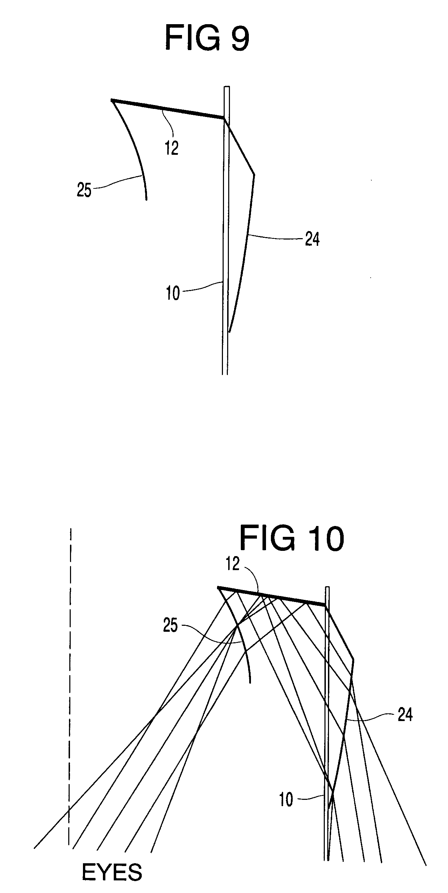

Figure 9 illustrates an embodiment in which protrusion is particularly low, and the exterior and interior parts are physically separate. Unlike the foregoing examples, this embodiment may have physically separated inner and outer parts on either side of a window, and may be considered more of a vehicle accessory than part of the door design.

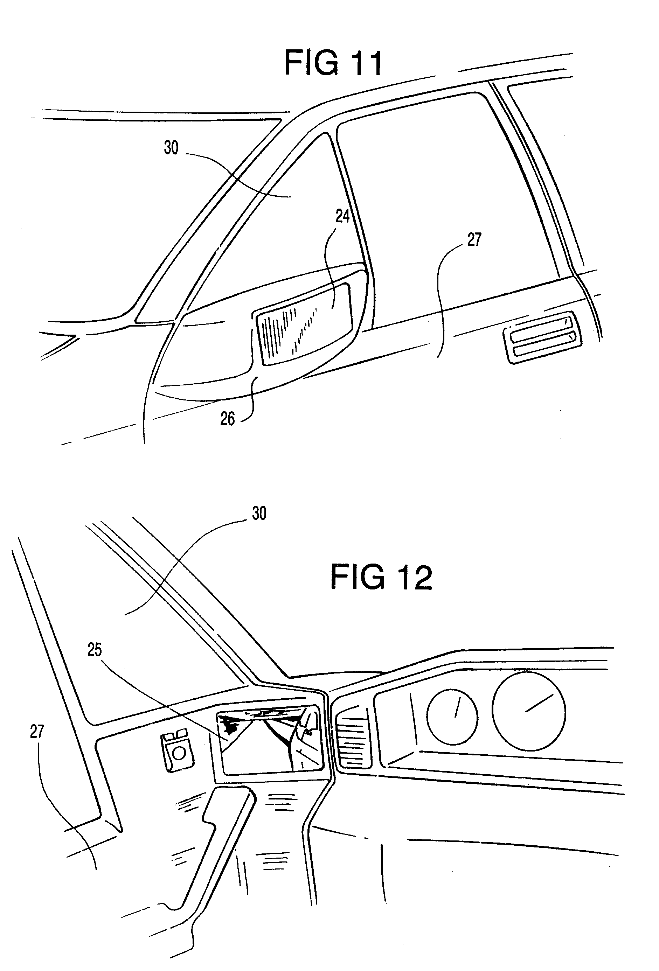

This particular embodiment, for which the ray diagram is shown in Figure 10, has been calculated using thin acrylic Fresnel prisms generally indicated by surfaces 24, 25, the outer one 24 of 15 deg prism angle and 1000 mm convex radius of curvature, and the inner one 25 of 35 deg prism angle and 350 mm concave radius of curvature. Exterior protrusion is only 40 mm and optical aberrations are small over the practical working range of the design. Image size is diminished about 40%.

Regarding installation of the described types of mirror assembly within the constraint of modern vehicle design and manufacture, except as mentioned for the example shown in Figure 9, it is envisaged that the system will generally be housed in the door structure as shown in Figure 11 and 12. In this case it is anticipated that the majority of the mirror system with be concealed within the interior of a door 27, and that the parts of the system which protrude into the vehicle interior will be concealed by appropriate design of the area surrounding the viewing aperture, and a suitable outer cowling 26 (Figure 11).

Adjustment of the system, cleaning and sealing from the outside environment may take several forms. Wherever possible the outermost optical element should form, or be enclosed by, a continuous part of the vehicle's exterior skin (such as the cowling 26), so that the remainder of the mirror system may be designed without the requirement of sealing, thereby facilitating the overall design task.

As mentioned, the body line 10 illustrated in the Figures is shown for location purposes only. In most cases it is anticipated that the door dropping glass will finish short of the mirror assembly, and that the remainder of the window aperture visibility requirement will be fulfilled by a fixed quarter light above the mirror assembly, as illustrated in Figures 11 and 12 by the quarter light 30.

The key features of the invention as disclosed herein are the dividing and individual routing of incoming light beams, and the displacing of light rays, exploited either separately or together by use of passive optical reflecting and/or refracting elements, to produce a vehicle exterior mirror system in which the exterior protrusion of the system is substantially less than that of an equivalent conventional mirror. Although the invention is illustrated by examples using these principles separately, combinations of the principles are not excluded. Furthermore, the invention also applied to optical systems in which the incoming light beam is broken up into more than two packets of rays which transit the mirror system independently, and which are subsequently reformed for presentation to the eyes. Included in this category are systems in which fragmentation of the light beam causes some parts of the incoming field to be lost to one eye, but which are nevertheless effective because that part of the incoming field is accessible to the other eye.

Although described hereinbefore in relation to embodiments in which the light rays are all substantially in the same plane it will nevertheless be appreciated that the changes in direction upon reflection or refraction may also be out of the common place, allowing greater freedom in positioning the various elements of the system.

It will be further appreciated that any of the optical surfaces of any of the optical elements including the reflector, may be composed of substantially planar surface elements inclined to the general plane of the surface at the point where they are located.

## Claims

1. An optical rear view system for a vehicle, comprising a reflector (12) mounted to receive light from objects to the rear of the vehicle and to reflect it towards an observer, and an optical system including a refractor (11, 13) in the light path from object to observer for diverting light incident on or reflected from the reflector (12), characterised in that the optical system comprises a first refractor (14; 18; 20; 24) in the path of light from the object to the reflector (12) and having an incident and an exit face from which light passing through the first refractor (14; 18; 20; 24) is directed towards the reflector (12), the said first refractor (14; 18; 20; 24) being positioned and shaped such that the mean optical path length of light through the first refractor is less than the mean optical path length of light from the said exit face of the first refractor to the reflector (12), and a second refractor (15; 19; 21; 25) in the path of light from the reflector to the observer, the second refractor (15; 19; 21; 25) having an incident face on which light from the reflector (12) is incident, and an exit face from which light leaving the second refractor (15; 19; 21; 25) is directed towards the observer, the position and shape of the second refractor (15; 19; 21; 25) being such that the mean path length of light through the second refractor is less than the mean path length of light from the reflector (12) to the incident face of the second refractor.

2. An optical rear view system for a motor vehicle, according to Claim 1, characterised in that the surface (24) of the system on which light from an object behind the vehicle is first incident lies at an acute angle to the longitudinal axis of the vehicle and is inclined such that a forward part of the incident surface is further from the vehicle axis than a rearward part thereof.

3. An optical rear view system according to Claim 2, characterised in that the said incident surface (24) of the system is the said incident face of the said first refractor (14; 18; 20), which diverts light incident thereon towards the vehicle axis.

4. An optical rear view system according to Claim 2, characterised in that at least one surface of at least one optical element is composed of a plurality of planar surface elements (16, 17) inclined to the general plane of the said surface.

5. An optical rear view system according to any of claims 2, 3 or 4 characterised in that the incident surface (24) of the optical system is composed of a plurality of elementary prisms

6. An optical rear view system according to Claim 5 characterised in that the angle of inclination of the incident surfaces of the said elementary prisms (16, 17) varies across the width of the said incident surface.

7. An optical rear view system according to Claim 2, characterised in that at least a part of the reflector (12) lies inside the boundary (10) defined by the outer surface of the vehicle.

8. An optical rear view system according to any preceding claim, characterised in that the optical material of the first refractor (14; 18; 20) is different from that of the second refractor (15; 19; 21).

9. An optical rear view system according to Claim 8, characterised in that the said first refractor (14; 18; 20) is composed of an acrylic material and the second refractor (15; 19; 21) is composed of an acrylic styrene copolymer.

10. An optical rear view system according to any preceding claims, characterised in that there are one or more contact deviation achromatic prisms in the light path from the reflector to the eye.

11. A motor vehicle having at least one optical rear view system according to any preceding claims mounted in a position along one side or in the door (27) of the vehicle.

## Patentansprüche

1. Ein optisches Rückblicksystem für ein Fahrzeug, bestehend aus einem Reflektor (12), der so montiert ist, daß er Licht von Gegenständen hinter dem Fahrzeug empfängt und es zu einem Beobachter reflektiert, und ein optisches System, das einen Refraktor (11, 13) im Weg des Lichts vom Gegenstand zum Beobachter beinhaltet, um Licht, das auf den Reflektor (12) fällt oder von ihm reflektiert wird, abzulenken,
**dadurch gekennzeichnet**,
daß das optische System einen ersten Refraktor (14; 18; 20; 24) im Weg des Lichts vom Gegenstand zum Reflektor (12) beinhaltet und eine Einfalls- und eine Ausfallsfläche hat, von denen durch den ersten Refraktor (14; 18; 20; 24) hindurchgehendes Licht zum Reflektor (12) geleitet wird, wobei der genannte erste Refraktor (14; 18; 20; 24) so positioniert ist und eine solche Form hat, daß die mittlere Länge des optischen Weges des Lichts durch den ersten Refraktor kürzer ist als die mittlere Länge des optischen Weges des Lichts von der genannten Ausfallsfläche des ersten Refraktors zum Reflektor (12), und einen zweiten Refraktor (15; 19; 21; 25) im Weg des Lichts vom Reflektor zum Beobachter beinhaltet, wobei der zweite Refraktor (15; 19; 21; 25) eine Einfallsfläche hat, auf der Licht vom Reflektor (12) einfällt, und eine Ausfallsfläche, von der Licht, das den zweiten Refraktor (15; 19; 21; 25) verläßt, zum Beobachter geleitet wird, wobei der zweite Refraktor (15; 19; 21; 25) so positioniert ist und eine solche Form hat, daß die mittlere Länge des Weges des Lichts durch den zweiten Refraktor kürzer ist als die mittlere Länge des Weges des Lichts vom Reflektor (12) zur Einfallsfläche des zweiten Refraktors.

2. Ein optisches Rückblicksystem für ein Kraftfahrzeug, gemäß Anspruch 1,
**dadurch gekennzeichnet**,
daß die Oberfläche (24) des Systems, auf die Licht von einem Gegenstand hinter dem Fahrzeug zuerst auffällt, in einem spitzen Winkel zur Längsachse des Fahrzeugs liegt und so geneigt ist, daß ein vorn liegender Teil der Einfallsoberfläche weiter von der Fahrzeugachse entfernt ist als ein hinten liegender Teil dieser Oberfläche.

3. Ein optisches Rückblicksystem gemäß Anspruch 2,
**dadurch gekennzeichnet**,
daß die genannte Einfallsoberfläche (24) des Systems die genannte Einfallsfläche des genannten ersten Refraktors (14; 18; 20) ist, die das darauf fallende Licht zur Fahrzeugachse hin ablenkt.

4. Ein optisches Rückblicksystem gemäß Anspruch 2,
**dadurch gekennzeichnet**,
daß mindestens eine Oberfläche mindestens eines optischen Elements aus einer Mehrzahl ebener Oberflächenelemente (16, 17) besteht, die zur allgemeinen Ebene der genannten Oberfläche geneigt sind.

5. Ein optisches Rückblicksystem gemäß einem der Ansprüche 2, 3 oder 4,
**dadurch gekennzeichnet**,
daß die Einfallsoberfläche (24) des optischen Systems aus einer Mehrzahl Grundprismen besteht.

6. Ein optisches Rückblicksystem gemäß Anspruch 5,
**dadurch gekennzeichnet**,
daß der Neigungswinkel der Einfallsoberflächen der genannten Grundprismen (16, 17) über die Breite der genannten Einfallsoberfläche variiert.

7. Ein optisches Rückblicksystem gemäß Anspruch 2,
**dadurch gekennzeichnet**,
daß mindestens ein Teil des Reflektors (12) innerhalb der von der äußeren Oberfläche des Fahrzeugs definierten Grenze (10) liegt.

8. Ein optisches Rückblicksystem gemäß einem der vorangehenden Ansprüche,
**dadurch gekennzeichnet**,
daß sich das optische Material des ersten Refraktors (14; 18; 20) von dem des zweiten Refraktors (15; 19; 21) unterscheidet.

9. Ein optisches Rückblicksystem gemäß Anspruch 8,
**dadurch gekennzeichnet**,
daß der genannte erste Refraktor (14; 18; 20) aus einem Acrylmaterial und der zweite Refraktor (15; 19; 21) aus einem Acrylstyrolcopolymer besteht.

10. Ein optisches Rückblicksystem gemäß einem der vorangehenden Ansprüche,
**dadurch gekennzeichnet**,
daß sich im Weg des Lichts vom Reflektor zum Auge ein oder mehrere achromatische Kontaktablenkungsprismen befinden.

11. Ein Kraftfahrzeug, an dem mindestens ein optisches Rückblicksystem gemäß einem der vorangehenden Ansprüche in einer Position entlang einer Seite oder in der Tür (27) des Fahrzeugs montiert ist.

## Revendications

1. Dispositif rétroviseur optique pour véhicule comprenant un réflecteur (12) monté de façon à recevoir la lumière provenant d'objets situés en arrière du véhicule et à la réfléchir en direction d'un observateur, et un système optique comprenant un dispositif réfringent (11, 13) placé sur le trajet lumineux reliant l'objet à l'observateur pour faire dévier la lumière incidente tombant sur ou réfléchie par le réflecteur (12), caractérisé en ce que le système optique comprend un premier dispositif réfringent (14, 18, 20, 24) sur le trajet lumineux reliant l'objet au réflecteur (12) et présentant une face incidente et une face de sortie d'où la lumière traversant le premier dispositif réfringent (14, 18, 20, 24) est dirigée en direction du réflecteur (12), ledit premier dispositif réfringent (14, 18, 20, 24) étant positionné et conformé de telle façon que la longueur moyenne du trajet optique de la lumière traversant le premier dispositif réfringent soit inférieure à la longueur moyenne du trajet optique de la lumière depuis ladite face de sortie du premier dispositif réfringent jusqu'au réflecteur (10), et un second dispositif réfringent (15, 19, 21, 25) situé sur le trajet lumineux entre le réflecteur et l'observateur, le second dispositif réfringent (15, 19, 21, 25) présentant une face incidente sur laquelle arrive la lumière provenant dudit réflecteur (12), et une face de sortie depuis laquelle la lumière quittant le second dispositif réfringent (15, 19, 21, 25) est dirigée vers l'observateur, la position et la conformation du second dispositif réfringent (15, 19, 21, 25) étant telles que la longueur moyenne du trajet de la lumière à travers le second dispositif réfringent soit inférieure à la longueur moyenne du trajet de la lumière mesurée entre le réflecteur (12) et la face d'incidence du second dispositif réfringent.

2. Dispositif rétroviseur optique pour véhicule automobile selon la revendication 1 caractérisé en ce que la surface (24) du système sur lequel tombe en premier la lumière provenant d'un objet cité en arrière du véhicule est disposée en formant un angle aigu par rapport à l'axe longitudinal du véhicule et est inclinée de telle façon qu'une partie avant de la surface d'incidence est plus éloignée de l'axe du véhicule qu'une partie arrière de cette surface.

3. Dispositif rétroviseur optique selon la revendication 2 caractérisé en ce que ladite surface d'incidence (24) du système est constituée par ladite face d'incidence dudit premier dispositif réfringent (14, 18, 20) qui dévie la lumière qui tombe sur lui en direction de l'axe du véhicule.

4. Dispositif rétroviseur optique selon la revendication 2 caractérisé en ce qu'au moins une surface d'au moins un élément optique est constituée par une pluralité d'éléments de surface plans (16, 17) inclinés par rapport au plan général de ladite surface.

5. Dispositif rétroviseur optique selon l'une quelconque des revendications 2, 3 ou 4 caractérisé en ce que ladite surface d'incidence (24) du système optique est composée d'une pluralité de prises élémentaires.

6. Dispositif rétroviseur optique selon la revendication 5 caractérisé en ce que l'angle d'inclinaison des surfaces d'incidence desdits prismes élementaires (16, 17) varie selon la largeur de ladite surface d'incidence.

7. Dispositif rétroviseur optique selon la revendication 2 caractérisé en ce qu'au moins une partie du réflecteur (12) est située à l'intérieur de la frontière (10) définie par la surface extérieure du véhicule.

8. Dispositif rétroviseur optique selon l'une quelconque des revendications précédentes caractérisé en que le matériau optique du premier dispositif réfringent (14, 18, 20) est différent de celui qui constitue le second dispositif réfringent (15, 19, 21).

9. Dispositif rétroviseur optique selon la revendication 8 caractérisé en ce que ledit premier dispositif réfringent (14, 18, 20) est constitué d'un matériau acrylique et le second dispositif réfringent (15, 19, 21) est constitué d'un copolymère de styrène acrylique.

10. Dispositif rétroviseur optique selon l'une quelconque des revendications précédentes caractérisé en ce que un ou plusieurs prismes de contact à déviation achromatique sont situés sur le trajet lumineux reliant le réflecteur à l'oeil de l'observateur.

11. Véhicule automobile comprenant au moins un dispositif rétroviseur optique selon l'une quelconque des revendications précédentes monté en place sur un côté ou dans la porte (27) du véhicule.
